# DEMANDE DE BREVET EUROPEEN

(11) **EP 4 044 415 A1**
(43) Date de publication de la demande: **17.08.2022**
(21) Numéro de dépôt: 22155776.2
(22) Date de dépôt: 09.02.2022
(51) Int. Cl.: H02M 1/36, H02M 3/158, H02M 1/00

(54) **DÉMARRAGE D'UNE ALIMENTATION À DÉCOUPAGE**

(30) Priorité: 15.02.2021 FR 2101421
(71) Demandeur: STMicroelectronics (Rousset) SAS, 13790 Rousset (FR)
(72) Inventeur: ORTET, Sebastien, 13790 Châteauneuf-le-Rouge (FR); BINET, Vincent, 13100 Aix-en-Provence (FR)
(74) Mandataire: Cabinet Beaumont

(57) **Abrégé**

La présente description concerne un convertisseur de tension (1) configuré pour fonctionner dans un mode de fonctionnement de type modulation de fréquence d'impulsion durant une phase de démarrage.

## Description

### Domaine technique

La présente description concerne de façon générale les circuits électroniques, et concerne plus particulièrement les alimentations à découpage ("Switched Mode Power Supply") ou SMPS et leur fonctionnement, en particulier lors du démarrage de l'alimentation.

### Technique antérieure

Dans une alimentation à découpage, aussi appelée convertisseur à découpage, un potentiel d'alimentation, fourni à une entrée de l'alimentation à découpage, est découpé (ou haché) en commutant des transistors MOS ("Metal Oxide Semiconductor" - métal oxyde semiconducteur) de manière à mettre en œuvre des phases d'accumulation d'énergie dans un élément inductif ou inductance et des phases de restitution, à une charge connectée en sortie de l'alimentation à découpage, de l'énergie accumulée dans cet élément inductif.

### Résumé de l'invention

Un mode de réalisation prévoit un convertisseur de tension configuré pour fonctionner dans un mode de fonctionnement de type modulation de fréquence d'impulsion durant une phase de démarrage.

Un autre mode de réalisation prévoit un procédé de commande d'un convertisseur de tension dans lequel le convertisseur fonctionne dans un mode de fonctionnement de type modulation de fréquence d'impulsion durant une phase de démarrage.

Selon un mode de réalisation, le convertisseur comprend des premier et deuxième transistors reliés en série entre un premier nœud d'application d'une première tension d'alimentation et un deuxième nœud d'application d'une deuxième tension de référence, les premier et deuxième transistors étant reliés l'un à l'autre par un troisième noeud, le troisième nœud étant relié à un quatrième nœud de sortie par une inductance, le quatrième nœud de sortie étant relié au deuxième nœud d'application de la deuxième tension de référence par un premier condensateur.

Selon un mode de réalisation, le convertisseur comprend un premier circuit configuré pour générer les signaux de commande des premier et deuxième transistors de manière à ce qu'une troisième tension de sortie sur le quatrième nœud suive une quatrième tension de consigne.

Selon un mode de réalisation, le convertisseur comprend un deuxième circuit configuré pour générer la quatrième tension de consigne, de telle manière que la valeur de la quatrième tension de consigne augmente jusqu'à la valeur d'une cinquième tension de consigne durant la phase de démarrage du convertisseur.

Selon un mode de réalisation, le deuxième circuit est configuré pour fournir un premier signal indiquant que le convertisseur est apte à alimenter une charge lorsque la quatrième tension atteint la valeur de la cinquième tension.

Selon un mode de réalisation, le deuxième circuit comprend un premier comparateur fournissant en sortie le premier signal, et dont une entrée est reliée à un cinquième nœud d'application de la cinquième tension et un sixième nœud d'application de la quatrième tension, le sixième nœud étant relié au premier nœud par une source de courant et au deuxième nœud par un deuxième condensateur.

Selon un mode de réalisation, le premier circuit comprend un deuxième comparateur configuré pour comparer la troisième tension avec la quatrième tension et fournir un deuxième signal commandant le début d'un cycle comprenant une phase d'accumulation d'énergie et une phase de restitution d'énergie.

Selon un mode de réalisation, le premier circuit comprend : un troisième comparateur configuré pour comparer la quatrième tension à une première rampe de tension, et pour fournir en sortie un troisième signal déterminant la durée de la phase d'accumulation d'énergie ; et un quatrième comparateur configuré pour comparer la quatrième tension à une deuxième rampe de tension, et pour fournir en sortie un quatrième signal déterminant la durée de la phase de restitution d'énergie.

Selon un mode de réalisation, le convertisseur est configuré pour mettre le troisième nœud dans un état de haute impédance entre les cycles.

Selon un mode de réalisation, la cinquième tension est sensiblement constante durant la croissance de la quatrième tension durant la phase de démarrage

Selon un mode de réalisation, le convertisseur est configuré pour que le courant dans l'inductance est toujours positif durant le fonctionnement du convertisseur.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente un mode de réalisation d'un convertisseur de tension ; et
la figure 2 est un ensemble de chronogrammes illustrant le fonctionnement du convertisseur de la figure 1.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

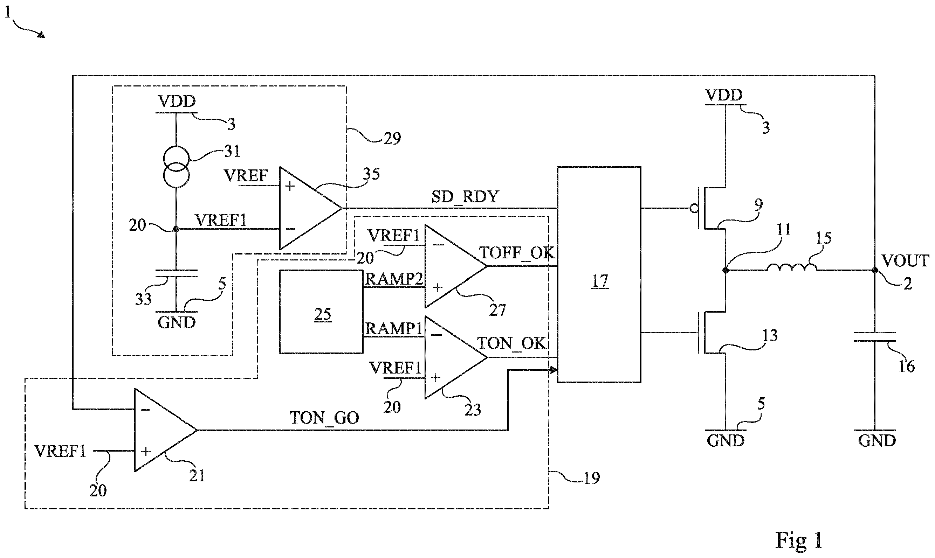

La figure 1 représente un mode de réalisation d'un convertisseur de tension 1. Le convertisseur 1 est un convertisseur DC/DC, de type alimentation à découpage, qui convertit une tension continue (DC) d'alimentation en une tension continue (DC) de sortie.

Le convertisseur 1 est configuré pour fournir une tension continue de sortie VOUT. Le convertisseur comprend un nœud de sortie 2, sur lequel est disponible la tension VOUT.

Le convertisseur 1 est alimenté par une tension continue d'alimentation VDD. Le convertisseur 1 est alors connecté entre un premier rail conducteur, ou noeud, 3 mis à la tension VDD, et un deuxième rail conducteur, ou noeud, 5 mis à un potentiel de référence GND, par exemple la masse.

Le convertisseur 1 est configuré pour fournir la tension VOUT à une valeur égale à une valeur de consigne. Pour cela, le convertisseur 1 reçoit une tension continue de consigne VREF référencée par rapport au potentiel GND, dont la valeur est représentative de la valeur de consigne de la tension VOUT, de préférence égale à la valeur de consigne de la tension VOUT.

Dans cet exemple, les tensions VOUT, VDD et VREF sont positives. Dans cet exemple, les tensions VOUT, VDD et VREF sont référencées au potentiel GND, par exemple la masse.

Dans cet exemple, le convertisseur 1 est de type abaisseur ou buck, c'est-à-dire que la valeur de consigne de la tension VOUT est inférieure à la valeur de la tension VDD. Autrement dit, la valeur de la tension VOUT est inférieure à celle de la tension VDD.

Le convertisseur 1 comprend un premier transistor MOS ("métal oxyde semiconductor" - métal oxyde semiconducteur) 9, de préférence un transistor PMOS (transistor MOS à canal P). Le transistor MOS 9 est relié, de préférence connecté, entre le rail 3 et un nœud interne 11. Dit autrement, une première borne de conduction du transistor 9, par exemple sa source, est reliée, de préférence connectée, au rail 3, une deuxième borne de conduction du transistor 9, par exemple son drain, étant reliée, de préférence connectée, au nœud 11.

Le convertisseur 1 comprend en outre un deuxième transistor MOS 13, de préférence un transistor NMOS (transistor MOS à canal N). Le transistor 13 est relié, de préférence connecté, entre le nœud 11 et le rail 5. Dit autrement, une première borne de conduction du transistor 13, par exemple sa source, est reliée, de préférence connectée, au rail 5, une deuxième borne de conduction du transistor 13, par exemple son drain, étant reliée, de préférence connectée, au nœud 11. A titre de variante, le transistor NMOS 13 peut être remplacé par une diode ou une diode Schottky.

Ainsi, les transistors 9 et 13 sont connectés en série entre les rails 3 et 5, et sont connectés l'un à l'autre au niveau du nœud interne 11. Les transistors 9 et 13 forment un étage de puissance.

Le convertisseur 1 comprend un élément inductif ou inductance 15. L'inductance 15 est connectée entre le nœud 11 et le nœud 2. Le convertisseur 1 comprend un élément capacitif ou condensateur de sortie 16 connectée entre le nœud 2 et le rail 5. A titre d'exemple, la capacité de l'élément capacitif 16 est supérieure à 2 µF, de préférence comprise entre 2,2 µF à 20 µF, voire supérieure à 20 µF. Ce condensateur de sortie joue le rôle de filtre. Autrement dit, ce condensateur de sortie du convertisseur permet de lisser le courant présent sur le nœud 2.

En fonctionnement, une charge est par exemple connectée entre le nœud 2 et le rail 5 de manière à être alimentée par la tension VOUT. Cette charge comprend par exemple une capacité d'entrée entre le nœud 2 et le rail 5.

Le convertisseur 1 comprend un circuit de commande 17. Le circuit 17 est configuré pour commander les transistors 9 et 13, de manière à réguler la tension VOUT pour que sa valeur soit égale à la valeur de consigne VREF.

Le convertisseur 1 peut fonctionner dans un mode de fonctionnement basse puissance, c'est-à-dire, dans ce mode de réalisation, dans un fonctionnement de type PFM, c'est-à-dire à modulation de fréquence d'impulsion ("Pulse Frequency Modulation"), qui est un mode de fonctionnement asynchrone.

Dans un convertisseur à découpage dans un mode de fonctionnement de type PFM, chaque cycle de fonctionnement du convertisseur comprend une phase d'accumulation d'énergie dans l'ensemble suivie d'une phase de restitution d'énergie à la charge connectée au convertisseur, les deux phases ayant de préférence des durées sensiblement constantes d'un cycle à l'autre. Pendant la phase d'accumulation d'énergie, le courant traversant l'élément inductif augmente. Pendant la phase de restitution d'énergie, le courant traversant l'élément inductif diminue. Pour chaque cycle de fonctionnement, il est souhaitable que le courant traversant l'élément inductif soit nul au début de la phase d'accumulation d'énergie et à la fin de la phase de restitution d'énergie. Une phase de restitution d'énergie peut être séparée du début de la phase d'accumulation d'énergie suivante par une phase d'attente durant laquelle le nœud 11 est dans un état de haute impédance. La fréquence des phases d'accumulation et de restitution d'énergie varie selon la valeur de la charge de sortie.

Selon le mode de réalisation de la figure 1, le convertisseur 1 comprend un circuit 19 configuré pour faire fonctionner le convertisseur dans le mode de fonctionnement PFM. Le circuit 19 comprend un comparateur 21, destiné à comparer la tension de sortie VOUT à une tension de consigne VREF1. Ainsi, le comparateur 21 comprend une première entrée, de préférence une entrée inverseuse, recevant la tension VOUT. Cette première entrée est reliée, de préférence connectée, au nœud 2. Le comparateur 21 comprend une deuxième entrée, de préférence une entrée non inverseuse, reliée, de préférence connectée, à un nœud 20 d'application de la tension VREF1. Le comparateur 21 fourni sur une sortie un signal TON_GO. Le signal TON_GO est représentatif du résultat de la comparaison entre les tensions VOUT et VREF1. Le signal TON_GO est fourni au circuit 17. Ainsi, la sortie du comparateur 21 est reliée, de préférence connectée, au circuit 17.

Le circuit 19 comprend un autre comparateur 23 configuré pour déterminer la durée de la phase d'accumulation d'énergie. Pour ce faire, le comparateur 23 est configuré pour comparer la tension VREF1 à une rampe de tension RAMP1. La rampe de tension RAMP1 est générée par un circuit 25 de génération de rampe de tension. Ainsi, une entrée du comparateur 23, de préférence une entrée inverseuse, est reliée, de préférence connectée, à une sortie du circuit 25 sur laquelle est fournie la rampe de tension RAMP1. Une autre entrée du comparateur 23, de préférence une entrée non inverseuse, est reliée, de préférence connectée, au nœud 20 d'application de la tension VREF1. Le comparateur 23 fourni sur une sortie un signal TON_OK. Le signal TON_OK est représentatif du résultat de la comparaison entre les tensions RAMP1 et VREF1. Le signal TON_OK est fourni au circuit 17. Ainsi, la sortie du comparateur 23 est reliée, de préférence connectée, au circuit 17.

Similairement, le circuit 19 comprend un autre comparateur 27 configuré pour déterminer la durée de la phase de restitution d'énergie. Pour ce faire, le comparateur 27 est configuré pour comparer la tension VREF1 à une rampe de tension RAMP2. La rampe de tension RAMP2 est par exemple générée par le circuit 25 de génération de rampe de tension. Ainsi, une entrée du comparateur 27, de préférence une entrée non inverseuse, est reliée, de préférence connectée, à une sortie du circuit 25 sur laquelle est fournie la rampe de tension RAMP2. Une autre entrée du comparateur 27, de préférence une entrée inverseuse, est reliée, de préférence connectée, au nœud 20 d'application de la tension VREF1. Le comparateur 27 fourni sur une sortie un signal TOFF_OK. Le signal TOFF_OK est représentatif du résultat de la comparaison entre les tensions RAMP2 et VREF1. Le signal TOFF_OK est fourni au circuit 17. Ainsi, la sortie du comparateur 27 est reliée, de préférence connectée, au circuit 17.

Par exemple, la rampe de tension RAMP1 est une rampe croissante et la rampe de tension RAMP2 est une rampe décroissante. De préférence, les rampes RAMP1 et RAMP2 ont des pentes constantes et sensiblement égales l'une à l'autre, au signe près. De préférence, les rampes de tension RAMP1 et RAMP2 sont référencées au rail 5.

Le fonctionnement du convertisseur en mode de fonctionnement de type PFM est ici décrit. Si la tension VOUT est supérieure à la valeur de la tension VREF1, le signal TON_GO a une première valeur et le circuit 17 commande les transistors 9 et 13 de telle manière que les transistors 9 et 13 soient bloqués. Le nœud 11 est ainsi dans un état de haute impédance. Aucun courant ne traverse l'inductance 15.

Lorsque la tension VOUT est inférieure à la valeur de la tension VREF1, le signal TON_GO prend une deuxième valeur indiquant au circuit 17 le début d'un cycle. Plus précisément, la deuxième valeur du signal TON_GO indique le début d'une phase d'accumulation d'énergie. Le circuit 17 commande alors le transistor 13 bloqué et le transistor 9 passant. De plus, la rampe RAMP1 commence à croitre à partir d'une valeur LR1, inférieure à la valeur de la tension VREF1 et constante d'un cycle à l'autre. Lorsque la valeur de la rampe RAMP1 atteint la valeur de la tension VREF1, le signal TON_OK signale cette information, correspondant à la fin de la phase d'accumulation d'énergie, au circuit 17. Ainsi, la durée de croissance de la tension RAMP1 de la valeur LR1 vers la valeur VREF1 correspond à la durée de la phase d'accumulation d'énergie.

De plus, lorsque la rampe RAMP1 atteint la valeur VREF1, un signal TOFF_GO passe d'une première valeur à une deuxième valeur signifiant le début de la phase de restitution d'énergie. Ainsi, lorsque le signal TOFF_GO prend la deuxième valeur, le circuit 17 commande les transistors 9 et 13 de telle manière que le transistor 9 devient bloqué et le transistor 13 devient passant. De plus, lorsque le signal TOFF_GO prend la deuxième valeur, la rampe RAMP2 commence à décroitre à partir d'une valeur LR2, supérieure à la valeur de la tension VREF1 et constante d'un cycle à l'autre. Lorsque la valeur de la rampe RAMP2 atteint la valeur de la tension VREF1, le signal TOFF_OK signale cette information, correspondant à la fin de la phase de restitution d'énergie, au circuit 17. Ainsi, la durée de décroissance de la tension RAMP2 de la valeur LR2 vers la valeur VREF1 correspond à la durée de la phase de restitution d'énergie.

A la fin du cycle de restitution d'énergie, le nœud 11 est remis dans un état de haute impédance jusqu'à ce que le comparateur21 détermine que la tension VOUT est de nouveau inférieure à la tension VREF1.

Le convertisseur 1 comprend en outre un circuit 29 de démarrage. Plus précisément, le circuit 29 est configuré pour fournir un signal SD_RDY représentatif de l'information selon laquelle le convertisseur est prêt à alimenter la charge reliée au nœud 2. Le circuit 29 est, en outre, configuré pour générer la tension de référence VREF1.

Le circuit 29 comprend une source de courant 31 et un condensateur 33 reliés en série entre le nœud 3 et le nœud 5. Plus précisément, une borne de la source 31 est reliée, de préférence connectée, au nœud 3 et une autre borne de la source 31 est reliée, de préférence connectée, au nœud 20. Une borne du condensateur 33 est reliée, de préférence connectée, au nœud 20 et une autre borne du condensateur est reliée, de préférence connectée, au nœud 5.

Le nœud 20 correspond au nœud d'application de la tension VREF1. Ainsi, le nœud 20 est relié, de préférence connecté, aux entrées des comparateurs 21, 23 et 27 recevant la tension VREF1. Pour des raisons de clarté, les liaisons entre les comparateurs 21, 23 et 27 et le nœud 20 ne sont pas représentées. La tension VREF1 correspond en outre à la tension aux bornes du condensateur 33. La valeur de la tension VREF1 est donc choisie en chargeant, à l'aide de la source 31, le condensateur 33.

Le circuit 29 comprend, en outre, un comparateur 35, configuré pour comparer la tension VREF1 à la tension de consigne VREF. De préférence, la valeur de la tension VREF est constante. Lorsque la valeur de la tension VREF1 atteint la valeur de la tension VREF, le signal SD_RDY passe d'une première valeur à une deuxième valeur signifiant que le convertisseur est apte à alimenter une charge non représentée.

De préférence, l'alimentation 1 ne comprend pas de circuit d'horloge destiné à être utilisé durant le démarrage. De préférence l'alimentation 1 ne comprend pas de circuit d'horloge.

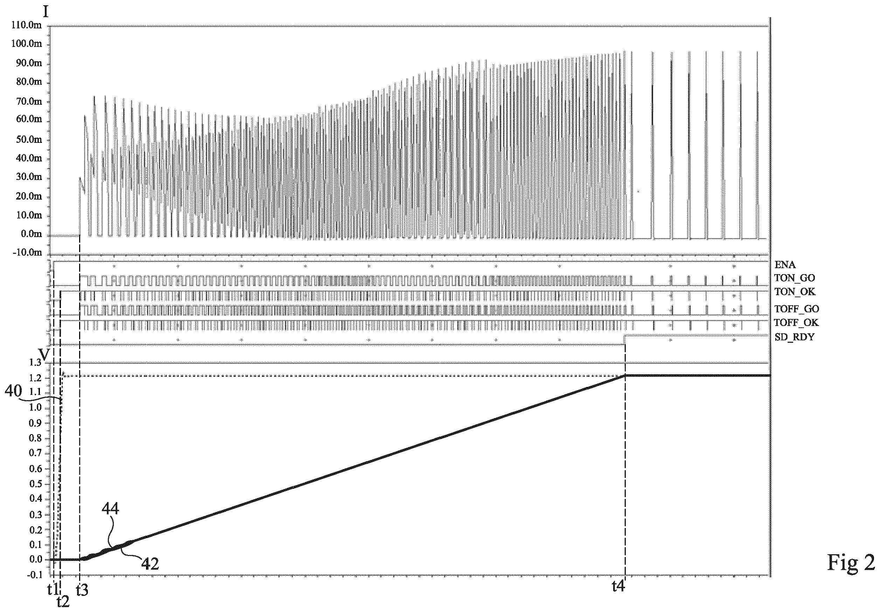

Le fonctionnement du convertisseur 1 lors de son démarrage sera décrit plus en détail en relation avec la figure 2.

La figure 2 est un ensemble de chronogrammes illustrant le fonctionnement du convertisseur 1. Plus précisément, la figure 2 comprend un chronogramme représentant le courant (I) dans l'inductance 15 en fonction du temps. La figure 2 comprend de plus des chronogrammes représentant, en fonction du temps, un signal ENA de commande du démarrage du convertisseur 1, et les signaux TON_GO, TON_OK, TOFF_GO, TOFF_OK et SD_RDY. La figure 2 comprend en outre un chronogramme représentant des tensions (V) en fonction du temps. La figure 2 représente la tension VREF par une courbe 40, la tension VREF1 par une courbe 42 et la tension VOUT par une courbe 44.

A un instant t1, le convertisseur est allumé. Autrement dit, le signal ENA passe d'une valeur basse à une valeur haute, signifiant que le convertisseur est allumé. Une phase de démarrage du convertisseur commence. L'alimentation est configurée pour fonctionner en mode PFM, de préférence uniquement en mode PFM, durant le démarrage. Le mode de fonctionnement initial de l'alimentation est donc le mode PFM. Les différents composants, en particulier les comparateurs 21, 23 et 27 sont allumés. A cet instant t1, le signal SD_RDY est à une valeur basse, signifiant que le convertisseur n'est pas prêt à alimenter une charge. De plus, la tension VREF commence à augmenter pour atteindre sa valeur de fonctionnement, c'est-à-dire la valeur de consigne à laquelle on souhaite rendre la tension VOUT égale.

A l'instant t1, le nœud 11 est dans un état de haute impédance. Le courant traversant l'inductance 15 est nul. La tension VOUT est nulle. De plus, le condensateur 33 est déchargé et la tension sur le nœud 20 est nulle.

A un instant t2, postérieur à l'instant t1, la tension VREF atteint sa valeur de fonctionnement, et les comparateurs sont prêts à comparer leurs valeurs d'entrée. Les signaux TON_OK et TOFF_OK prennent ainsi, dans l'exemple de la figure 2, une valeur haute signifiant que les rampes n'ont pas atteint la valeur VREF1, les rampes n'ayant pas commencé leurs variations, et le cycle de fonctionnement n'ayant pas commencé.

A un instant t3, postérieur à l'instant t2, le condensateur 33 commence à être chargé. La tension VREF1 augmente et devient supérieure à la tension VOUT, les tensions VOUT et VREF1 ayant été sensiblement égales à zéro entre les instants t1 et t3. Le comparateur 21 détermine donc que la tension VREF1 est supérieure à la tension VOUT, et le signal TON_GO passe d'une valeur basse à une valeur haute, démarrant une phase d'accumulation d'énergie. Le courant dans l'inductance 15 augmente donc.

Le convertisseur est en mode de fonctionnement PFM. Ce qui permet à la tension VOUT de suivre la croissance de VREF1 par une succession de cycles comprenant une phase d'accumulation d'énergie et une phase de restitution d'énergie, les cycles pouvant être séparés par une phase durant laquelle le nœud 11 est dans un état de haute impédance.

A un instant t4, la tension VREF1 atteint la valeur de consigne VREF. La phase de démarrage est ainsi finie et le signal SD_RDY passe d'une valeur basse, signifiant que la phase de démarrage est en cours et que la charge ne peut être alimentée, à une valeur haute, signifiant que le convertisseur est apte à alimenter la charge. Le convertisseur peut ensuite rester dans un mode de fonctionnement PFM ou entrer dans un autre mode de fonctionnement, par exemple un mode de fonctionnement de type PWM (modulation de largeur d'impulsions ou "Pulse Width Modulation"). Certains dispositifs peuvent être adaptés à fonctionner uniquement en mode basse puissance et ne pas être adaptés à fonctionner en mode PWM.

Le démarrage du convertisseur est donc effectué entre les instants t1 et t4. A partir de l'instant t4, le convertisseur est en fonctionnement normal. Durant le démarrage, la tension VREF1 est une rampe de tension de manière à atteindre la valeur VREF. En fonctionnement normale, la tension VREF1 est sensiblement constante et sensiblement égale à la tension de consigne VREF. La tension VREF est sensiblement constante entre les instants t3 et t4, c'est-à-dire durant la croissance de la tension VREF1.

Selon un mode de réalisation, le nœud 20 est relié au nœud 2, par exemple par un interrupteur. Ainsi, le condensateur 33 est chargé jusqu'à la valeur de la tension VOUT au début de la phase de démarrage, par exemple avant l'instant t3.

Un avantage des modes de réalisation décrits est que le mode de fonctionnement PFM, qui effectue des cycles d'accumulation et de restitution d'énergie lorsque la tension de sortie est inférieure à la tension VREF1, est moins couteux en énergie que le mode de fonctionnement PWM, dans lequel des cycles d'accumulation et de restitution d'énergie sont effectués de manière continue.

Un autre avantage des modes de réalisation décrits est qu'ils permettent de fabriquer des dispositifs destinés à fonctionner uniquement en mode basse puissance, par un mode de fonctionnement PFM. Ces dispositifs peuvent ne pas comprendre de circuits correspondant au mode de fonctionnement PWM, qui est généralement utilisé pour le démarrage de convertisseur de type alimentation à découpage.

Un autre avantage des modes de réalisation décrits est qu'ils permettent d'éviter la présence de courant négatif dans l'inductance 15 et permettent ainsi d'économiser de l'énergie. La phase de démarrage est ainsi plus courte.

Un autre avantage des modes de réalisation décrits est que le démarrage du convertisseur ne nécessite ni signal d'horloge, ni amplificateur d'erreur.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en œuvre pratique des modes de réalisation et variantes décrits est à la portée de la personne du métier à partir des indications fonctionnelles données ci-dessus.

## Revendications

1. Convertisseur de tension (1) configuré pour fonctionner dans un mode de fonctionnement de type modulation de fréquence d'impulsion durant une phase de démarrage.

2. Procédé de commande d'un convertisseur de tension (1) dans lequel le convertisseur fonctionne dans un mode de fonctionnement de type modulation de fréquence d'impulsion durant une phase de démarrage.

3. Convertisseur selon la revendication 1 ou procédé selon la revendication 2, dans lequel le convertisseur comprend des premier (9) et deuxième (13) transistors reliés en série entre un premier nœud (3) d'application d'une première tension d'alimentation (VDD) et un deuxième nœud (5) d'application d'une deuxième tension de référence (GND), les premier (9) et deuxième (13) transistors étant reliés l'un à l'autre par un troisième nœud (11), le troisième nœud (11) étant relié à un quatrième nœud de sortie (2) par une inductance (15), le quatrième nœud de sortie étant relié au deuxième nœud d'application (5) de la deuxième tension de référence (GND) par un premier condensateur (16).

4. Convertisseur ou procédé selon la revendication 3, dans lequel le convertisseur comprend un premier circuit (19) configuré pour générer les signaux de commande des premier (9) et deuxième (13) transistors de manière à ce qu'une troisième tension de sortie (VOUT) sur le quatrième nœud suive une quatrième tension de consigne (VREF1).

5. Convertisseur ou procédé selon la revendication 4, dans lequel le convertisseur comprend un deuxième circuit (29) configuré pour générer la quatrième tension de consigne (VREF1), de telle manière que la valeur de la quatrième tension de consigne (VREF1) augmente jusqu'à la valeur d'une cinquième tension de consigne (VREF) durant la phase de démarrage du convertisseur.

6. Convertisseur ou procédé selon la revendication 5, dans lequel le deuxième circuit (29) est configuré pour fournir un premier signal (SD_RDY) indiquant que le convertisseur est apte à alimenter une charge lorsque la quatrième tension (VREF1) atteint la valeur de la cinquième tension (VREF) .

7. Convertisseur ou procédé selon la revendication 6, dans lequel le deuxième circuit (29) comprend un premier comparateur (35) fournissant en sortie le premier signal (SD_RDY), et dont une entrée est reliée à un cinquième nœud d'application de la cinquième tension (VREF) et un sixième nœud (20) d'application de la quatrième tension (VREF1), le sixième nœud étant relié au premier nœud (3) par une source de courant (31) et au deuxième nœud (5) par un deuxième condensateur (33).

8. Convertisseur ou procédé selon l'une quelconque des revendications 4 à 7, dans lequel la cinquième tension (VREF) est sensiblement constante durant la croissance de la quatrième tension (VREF1) durant la phase de démarrage.

9. Convertisseur ou procédé selon l'une quelconque des revendications 4 à 8, dans lequel le premier circuit (19) comprend un deuxième comparateur (21) configuré pour comparer la troisième tension (VOUT) avec la quatrième tension (VREF1) et fournir un deuxième signal (TON_GO) commandant le début d'un cycle comprenant une phase d'accumulation d'énergie et une phase de restitution d'énergie.

10. Convertisseur ou procédé selon l'une quelconque des revendications 4 à 9, dans lequel le premier circuit (19) comprend :
un troisième comparateur (23) configuré pour comparer la quatrième tension (VREF1) à une première rampe de tension (RAMP1), et pour fournir en sortie un troisième signal (TON_OK) déterminant la durée de la phase d'accumulation d'énergie ; et
un quatrième comparateur (27) configuré pour comparer la quatrième tension (VREF1) à une deuxième rampe de tension (RAMP2), et pour fournir en sortie un quatrième signal (TOFF_OK) déterminant la durée de la phase de restitution d'énergie.

11. Convertisseur ou procédé selon l'une quelconque des revendications 3 à 10, dans lequel le convertisseur est configuré pour mettre le troisième nœud (11) dans un état de haute impédance entre les cycles.

12. Convertisseur ou procédé selon l'une quelconque des revendications 3 à 11, dans lequel le convertisseur est configuré pour que le courant dans l'inductance (15) est toujours positif durant le fonctionnement du convertisseur.
